# EUROPÄISCHE PATENTSCHRIFT

(11) **EP 2 384 270 B1**
(45) Veröffentlichungstag und Bekanntmachung des Hinweises auf die Patenterteilung: **25.08.2021**
(21) Anmeldenummer: 10702290.7
(22) Anmeldetag: 29.01.2010
(51) Int. Cl.: B28B 11/08, B23C 5/08, B28B 11/12, F24S 70/16, F24S 10/80

(54) **VERFAHREN ZUR HERSTELLUNG EINES KERAMISCHEN ABSORBERKÖRPERS FÜR SOLARSTRAHLUNG**
METHOD FOR THE PRODUCTION OF A CERAMIC ABSORBER MEMBER FOR SOLAR RADIATION
PROCÉDÉ DE FABRICATION D'UN CORPS D'ABSORBEUR CÉRAMIQUE DESTINÉ AU RAYONNEMENT SOLAIRE

(30) Priorität: 30.01.2009 DE 102009006953
(43) Veröffentlichungstag der Anmeldung: 09.11.2011
(73) Patentinhaber: Saint-Gobain IndustrieKeramik Rödental GmbH, 96472 Rödental (DE)
(72) Erfinder: HACK, Udo, 91336 Heroldsbach (DE)
(74) Vertreter: Lendvai, Tomas
(86) Internationale Anmeldenummer: PCT/EP2010/051134
(87) Internationale Veröffentlichungsnummer: WO 2010/086430

(56) Entgegenhaltungen:
- DE-A1- 3 046 181
- DE-A1- 10 232 387
- DE-A1-102005 028 863
- DE-U1- 9 016 385
- None

## Beschreibung

Die Erfindung betrifft ein Verfahren zur Herstellung eines keramischen Absorberkörpers für Solarstrahlung mit einer ersten Oberfläche und einer der ersten Oberfläche gegenüberliegenden zweiten Oberfläche, wobei der Absorberkörper eine Vielzahl im Wesentlichen geradlinig verlaufender, die erste Oberfläche mit der zweiten Oberfläche verbindender Kanäle aufweist.

Absorberkörper für Solarstrahlung werden in sogenannten solarthermischen Kraftwerken eingesetzt. Bei diesen wird die in einer Vielzahl von Absorberkörpern durch Absorption konzentrierter Solarstrahlung gewonnene Wärme zur Stromerzeugung genutzt. Im Einzelnen wird die einfallende Solarstrahlung von einer Vielzahl von Spiegeln (Heliostaten) auf eine aus einer Vielzahl von in einer gemeinsamen Tragkonstruktion gehaltenen Absorberkörpern bestehende Solarabsorbereinheit gerichtet, so dass diese mit der 200- bis 1000-fachen Intensität beaufschlagt wird. Ein durch die Kanäle der Solarabsorberkörper eingesaugter Umgebungsluftstrom wird so auf eine Temperatur von 700°C aufgeheizt und in einem Leitungssystem einem Wärmetauscher zugeführt, wo die Wärme an einen Wasser-Dampfkreislauf abgegeben wird. In diesem wird in bekannter Weise eine Dampfturbine angetrieben, die mit einem Generator verbunden ist. Die nach Verlassen des Wärmetauschers auf eine Temperatur von ca. 150°C abgekühlte Umgebungsluft wird sodann wieder der Solarabsorberanordnung zugeführt, wo sie unter Kühlung der die Absorberkörper tragenden Gehäuse in die Umgebung ausströmt und teilweise zur Wiedererhitzung wieder eingesaugt wird.

Verfahren zur Herstellung solcher Absorberkörper gemäß dem Oberbegriff sind aus dem Stand der Technik in verschiedener Ausführung bekannt. In der DE 197 40 644 A1 ist ein poröser Absorberkörper aus einem keramischen Werkstoff beschrieben. Dieser weist im Bereich der der einfallenden Solarstrahlung zugewandten Oberfläche eine erhöhte Porosität auf, die in den Absorberkörper durch Sandstrahlen der Oberfläche eingebracht wird. Hierdurch wird die die Solarstrahlung teilweise reflektierende Frontfläche des Absorberkörpers reduziert, so dass entsprechend ein höherer Anteil der einfallenden Solarstrahlung in die Poren des Absorberkörpers eindringt und dort absorbiert werden kann.

Gemäß einer weiteren in der DE 197 40 644 A1 beschriebenen Ausführungsform weist der Absorberkörper eine Vielzahl gerade verlaufender Kanäle mit rechteckigem Querschnitt auf, die schachbrettartig übereinander und nebeneinander angeordnet sind. Die die Kanäle jeweils begrenzenden, sich kreuzenden Wände sind in ihrem vorderen, der Solarstrahlung zugewandten Bereich durch schräg auf die Oberfläche auftreffende Sandstrahlung bis in eine bestimmte Tiefe auf etwa ein Viertel ihrer ursprünglichen Wanddicke reduziert, wodurch sich die die Solarstrahlung reflektierende Frontfläche des Absorberkörpers insgesamt entsprechend reduziert.

Praktische Untersuchungen haben jedoch gezeigt, dass sich eine derartige Reduzierung der Wandstärke durch Sandstrahlung nicht reproduzierbar erreichen lässt, da das Sandstrahlen lediglich zu einem Abrunden der Kanten führt, weshalb der gewünschte Effekt, nämlich eine Reduzierung der reflektierenden Oberfläche des Absorberkörpers zur Erhöhung der Strahlungsabsorption, durch das in der DE 197 40 644 A1 beschriebene Verfahren nicht in befriedigender Weise erreicht wird.

Aus DE 90 16 385 U1 ist ein Absorber zum Umwandeln von konzentrierter Sonnestrahlung in Wärme und zum Übertragen der durch Absorption entstehenden Wärme auf ein strömendes Fluid bekannt. Der Absorberkörper weist eine Vielzahl von Kanälen auf, die im Wesentlichen geradlinig verlaufend die erste Oberfläche mit der zweiten Oberfläche des Absorberkörpers verbinden.

Aus DE 30 46 181 A1 ist ein Sonnenkollektor bekannt. Der Sonnenkollektor weist einen Absorberkörper für Sonnenstrahlung auf. Der Absorberkörper weist eine Vielzahl von Kanälen auf, die im Wesentlichen geradlinig verlaufend die erste Oberfläche mit der zweiten Oberfläche des Absorberkörpers verbinden.

Aus DE 10 2005 028863 A1 ist ein Solarkollektor mit flacher Deckscheibe bekannt, wobei trichterförmige Bauteile nebeneinander unter der Deckscheibe angeordnet sind und die trichterförmigen Bauteile in ihrem Inneren eine wabenförmige Struktur enthalten, die sich von einer Seite der Wabe zur anderen verengt, so dass eine Vielzahl von aneinanderliegenden Trichtern entsteht.

Aus DE 102 32 387 A1 ist ein Absorber zur Erwärmung eines strömenden Fluids bekannt. Der Absorber weist eine Fläche zur Strahlungsabsorption und mit dieser Fläche durch finnenartige Wände mit gutem Wärmeleitvermögen voneinander getrennte Kanäle auf. Die Kanäle bewirken die Strömung des Fluids und dessen Erwärmung durch die absorbierte Wärme.

Da die Absorberkörper aus Festigkeitsgründen nicht mit beliebig geringer Wandstärke hergestellt werden können, weisen die Absorberkörper insgesamt also eine zu hohe Reflektivität für die einfallende Solarstrahlung auf, so dass sie nicht hinreichend effizient arbeiten.

Ausgehend hiervon liegt der Erfindung die Aufgabe zugrunde, ein Verfahren zur Herstellung eines keramischen Absorberkörpers anzugeben, welches einfach ausführbar ist und mit welchem sich hocheffizient arbeitende Absorberkörper erzeugen lassen.

Die Aufgabe wird mit einem Verfahren zur Herstellung eines keramischen Absorberkörpers für Solarstrahlung der eingangs genannten Art gelöst, welches folgende Verfahrensschritte aufweist:
- Erzeugen eines Absorberkörpergrünlings,
- materialabtragende Bearbeitung der ersten Oberfläche des Absorberkörpergrünlings zur Vergrößerung der für die Absorption wirksamen Oberfläche und
- Brennen des Grünlings.

Der besondere Vorteil des erfindungsgemäßen Verfahrens besteht darin, dass durch materialabtragende Bearbeitung des Absorberkörpergrünlings im Gegensatz zur Bearbeitung des fertiggebrannten Absorberkörpers die für die Absorption der Solarstrahlung wirksame Oberfläche entscheidend vergrößert werden kann, so dass insgesamt der Anteil der von dem Aborberkörper in die Umgebung reflektierten Solarstrahlung reduziert wird. Da die für die materialabtragende Bearbeitung des Grünlings erforderlichen Bearbeitungsmaschinen in der Regel zur Reinigung gebrannter Bauteile Verfügung stehen, kann das erfindungsgemäße Verfahren ohne nennenswerten Aufwand in bestehenden Anlagen durchgeführt werden.

Die Vergrößerung der ersten Oberfläche des Absorberkörpers zwecks Erhöhung des Gesamtabsorptionsgrades lässt sich auf unterschiedliche Weise erzielen. Entscheidend ist jeweils, dass die Bearbeitung nicht am fertiggebrannten Produkt, sondern am Grünling erfolgt, wodurch ein effektiver Materialabtrag mit hoher Präzision bei geringem Bearbeitungsaufwand möglich ist.

Nach einer ersten vorteilhaften Ausgestaltung des erfindungsgemäßen Verfahrens erfolgt die materialabtragende Bearbeitung der ersten Oberfläche des Absorberkörpergrünlings durch Einformen einer Strahleintrittsfläche in die Wandung wenigstens eines Kanals des Absorberkörpergrünlings im Bereich seiner Mündung an der ersten Oberfläche, wobei die Strahleintrittsfläche im Wesentlichen eben und zur Kanalerstreckungsachse geneigt ausgebildet wird.

Die Einformung einer Strahleintrittsfläche in wenigstens einen Kanal hat den Vorteil, dass in diesem Kanal der freie Öffnungsquerschnitt, durch den die Solarstrahlung in den Kanal eintreten kann, gegenüber einer gewöhnlichen Kanalöffnungsquerschnitt deutlich vergrößert ist. Entsprechend ist auch die reflektierende Oberfläche des Absorberkörpers, die diesen Kanal umgibt, reduziert, so dass ein geringerer Anteil der Solarstrahlung wieder in die Umgebung reflektiert wird. Durch die Neigung der Strahleintrittsfläche wird andererseits erreicht, dass das unter unterschiedlichen Winkeln je nach Sonnenstand und je nach Position des jeweils reflektierenden Spiegels relativ zur ersten Absorberkörperoberfläche schräg einfallende Licht in den Kanal hineinreflektiert wird, wo es an den Wänden des Kanals absorbiert und in Wärme umgewandelt wird. Der in der Kanalwand weiter reflektierte Bruchteil wird durch Vielfachreflexion in den Kanalwänden schließlich ebenfalls absorbiert.

Bei konventionellen Absorberkörpern findet eine nennenswerte Absorption der Solarstrahlung lediglich auf einer Kanallänge von wenigen Millimetern unmittelbar an der der Solarstrahlung zugewandten Oberfläche statt, wie in dem Aufsatz "Cellular Ceramics Use in Solar Radiation Conversion" (Cellular Ceramics: Structure, Manufacturing Properties and Applications by Scheffler, M. and Colombo, P. (Eds.), Wiley-VCH Verlag GmbH & Co. KGaA, Weinheim 2005) ausgeführt wird. Diese für die Absorption wirksame Kanallänge wird durch das Vorsehen der Strahleintrittsfläche im Rahmen der Ausgestaltung des erfindungsgemäßen Verfahrens nun entscheidend vergrößert.

Bevorzugt wird eine zur Kanalerstreckung geneigte Strahleintrittsfläche jeweils in eine Mehrzahl der Kanäle des Absorberkörpergrünlings eingeformt. Hierbei sind sämtliche Strahleintrittsflächen bevorzugt parallel zueinander ausgerichtet. Dadurch, dass die Strahleintrittsfläche in eine Mehrzahl der Kanäle, bevorzugt in alle Kanäle des Absorberkörpergrünlings, eingeformt wird, vervielfacht sich der vorteilhafte Effekt dieser Fläche entsprechend. Schon aus Gründen einer kostengünstigen Fertigung sind die in der Mahrzahl der Kanäle eingeformten Strahleintrittsflächen zueinander parallel ausgebildet.

Der Winkel der Strahleintrittsfläche relativ zur Erstreckungsrichtung des zugehörigen Kanals kann unterschiedlich gewählt sein. Um einerseits die für die Absorption wirksame Oberfläche deutlich zu vergrößern und andererseits eine Reflexion der schräg auf die Strahleintrittsfläche auftreffenden Solarstrahlung tief in den Kanal zu ermöglichen, beträgt der zwischen der Strahleintrittsfläche und der Kanalersteckungsachse eingeschlossene Winkel bevorzugt 15 - 30°, insbesondere ca. 22,5°.

Die materialabtragende Einformung der der Strahleintrittsfläche in den Absorberkörpergrünling kann auf unterschiedliche Weise erfolgen. Besonders vorteilhaft ist ein Einfräsen der Fläche in die Wandung des zugehörigen Kanals.

Das Einfräsen der Strahleintrittsfläche kann mit mehreren Bearbeitungsstrategien erfolgen. Zur Einfräsung der Strahleintrittsfläche mit dem gewünschten Neigungswinkel kann nach einer weiteren Ausgestaltung der Erfindung die Strahleintrittsfläche mittels eines asymmetrischen Scheibenfräsers mit zur ersten Oberfläche des Absorberkörpers parallel ausgerichteter Rotationsachse in den Absorberkörpergrünling eingefräst werden. Als asymmetrischer Scheibenfräser wird ein Scheibenfräser bezeichnet, dessen am Umfang angeordnete Schneiden nicht symmetrisch zu der sie tragenden Scheibe angeordnet sind. Die Schneiden schließen bevorzugt einen für die materialabtragende Bearbeitung wirksamen Fräswinkel von beispielsweise dabei 20° bis 50°, bevorzugt ca. 30°, ein.

Alternativ zum Einsatz eines asymmetrischen Scheibenfräsers kann die Strahleintrittsfläche im gewünschten Winkel mittels eines symmetrischen Scheibenfräsers mit zur ersten Oberfläche des Absorberkörpers geneigt ausgerichteter Rotationsachse in den Absorberkörpergrünling eingefräst werden. Bei dem symmetrischen Fräser stehen die Schneiden symmetrisch zu der sie tragenden Scheibe bzw. zu einer zur Rotationsachse des Fräsers orthogonalen Fläche. Die Schneiden schließen wiederum bevorzugt einen Winkel von 20° bis 50°, bevorzugt ca. 30°, ein, wobei die Rotationsachse des Scheibenfräsers zwischen 5° und 25°, bevorzugt ca. 7,5°, zur ersten Oberfläche des Absorberkörpers geneigt ausgerichtet wird.

Bei dem Absorberkörper sind die Kanäle typischerweise mit einem rechteckigen oder quadratischen Öffnungsquerschnitt ausgebildet und die Öffnungsquerschnitte sind schachbrettartig auf der ersten Oberfläche des Absorberkörpers angeordnet. Sind die Öffnungsquerschnitte der Kanäle rechteckig, d.h. mit sich jeweils gegenüberstehenden breiten und schmalen Seiten ausgebildet, so sind die Strahleintrittsflächen bevorzugt in jeweils einer breiten Seite, insbesondere über deren gesamte Erstreckung, ausgebildet. Hierdurch wird die sich aus den einzelnen Strahleintrittsflächen zusammensetzende wirksame Gesamtfläche vergrößert und die die Solarstrahlung rückreflektierende Oberfläche entsprechend reduziert.

Nach einer weiteren vorteilhaften Ausgestaltung der Erfindung können bei quadratisch oder rechteckig geformten und im Schachbrettmuster angeordneten Kanalöffnungsquerschnitten die Strahleintrittsfläche jeweils bei einer Vielzahl von Kanälen des Absorberkörpers derart eingefräst werden, dass der Fräser die Strahleintrittsflächen zeilenweise in die jeweilige Wand der in einer Zeile angeordneten Kanäle einfräst. was eine besonders zeiteffiziente Bearbeitungsstrategie darstellt.

Nach einer weiteren besonders vorteilhaften Ausgestaltung der Erfindung ist der asymmetrische Scheibenfräser als Multikanalfräser ausgebildet ist und fräst eine Mehrzahl von Strahleintrittsflächen gleichzeitig in den Absorberkörper ein. Hierbei entspricht die Mehrzahl der gleichzeitig eingefrästen Strahleintrittsflächen der Anzahl der auf der Rotationsachse des Multikanalfräsers angeordneten Einzelfräser. Hierdurch wird in sehr kurzer Zeit eine große Zahl von Strahleintrittsflächen erzeugt.

Zur weiteren Vergrößerung der Oberfläche kann schließlich vorgesehen sein, dass die vorderen Kanten der Kanalwandungen des im Anschluss an die Oberflächenvergrößerung gebrannten Absorberkörpers mittels Sandstrahlen leicht abgerundet werden.

Alternativ zum Erzeugen einer oder mehrerer Strahleintrittsflächen durch materialabtragende Bearbeitung des Absorberkörpergrünlings mittels Fräsen kann nach einer weiteren Ausgestaltung der Erfindung vorgesehen sein, dass die materialabtragende Bearbeitung durch Sandstrahlen der ersten Oberfläche des Absorberkörpergrünlings erfolgt. Durch Sandstrahlen des Absorberkörpergrünlings wird ein signifikanter Materialabtrag an der ersten Oberfläche des Absorberkörpergrünlings erreicht. Hierbei können die Kanten der Begrenzungswände der Kanäle konkav abgerundet werden, was ausschließlich durch eine Sandstrahlbearbeitung des Absorberkörpergrünlings gelingt.

Ebenso ist es jedoch auch möglich, eine Strahleintrittsfläche durch Sandstrahlen in den Absorberkörpergrünling einzuformen. Hierzu wird der Absorberkörper zum Sandstrahl bevorzugt geneigt ausgerichtet und eine Relativbewegung zwischen Sandstrahl und erster Oberfläche erzeugt. Es versteht sich, dass der Neigungswinkel den Winkel zwischen der Strahleintrittsfläche und der Kanalerstreckungsachse dabei bestimmt. Um möglichst viele Strahleintrittsflächen parallel zu erzeugen, kann zudem vorgesehen sein, dass die Sandstrahldüsen in eine oszillierende, zur Relativbewegung vorzugsweise orthogonale Bewegung versetzt werden, um die erste Oberfläche des Absorberkörpers möglichst großflächig zu beaufschlagen.

Als Bearbeitungsstrategie kann nach einer weiteren Lehre der Erfindung vorgesehen sein, dass die Sandstrahlen von zwei Seiten symmetrisch zur Flächennormalen der ersten Oberfläche auf die erste Oberfläche auftreffen, wodurch sich eine besonders gleichmäßige Oberflächenstruktur ergibt. Sind die Öffnungsquerschnitte der Kanäle an der ersten Oberfläche wiederum rechteckig ausgebildet und schachbrettartig angeordnet, so dass sich die Begrenzungswände der Kanäle in üblicher Weise senkrecht kreuzen, so ist es sinnvoll, das Sandstrahlen nach Drehung des Absorberkörpergrünlings um 90° zu wiederholen, um bei sämtlichen Kanten die gewünschte gleichmäßig abgerundete Oberflächenstruktur zu erzielen.

Wie Untersuchungen der Anmelderin ergeben haben, ermöglichen Absorberkörper mit hexagonalen Kanalquerschnitten nach Art von Bienenwaben eine besonders effektive Strahlungseinkopplung, da bei gegenüber quadratischen Querschnitten unverändertem hydraulischem Durchmesser und gleicher Querschnittsfläche eine um 15 % vergrößerte Wärmeaustauschfläche erzielbar ist. Auch bei hexagonalen Kanalquerschnitten ist es möglich, Strahleintrittsflächen durch winklige Beaufschlagung der ersten Oberfläche des Absorberkörpers zu erzeugen. Eine signifikante Oberflächenvergrößerung im Bereich von 20% kann beispielsweise durch Sandstrahlen der ersten Oberfläche des Absorberkörpergrünlings mit einem Druck zwischen 3,5 und 5 bar bei einer Bearbeitungsdauer zwischen 2 und 10 sec erzielt werden.

Mittels des erfindungsmäßen Verfahrens ist ein Absorberkörper für Solarstrahlung herstellbar, welcher sich durch eine sehr hohe Absorption der einfallenden Solarstrahlung und somit durch eine sehr hohe Effizienz auszeichnet.

Zu den Vorteilen des mittels des erfindungsgemäßen Verfahrens hergestellten Absorberkörpers gilt das Vorstehend Gesagte.

Insbesondere bewirkt die Einformung einer Strahleintrittsfläche in wenigstens einen Kanal des Absorberkörpers, dass in diesem Kanal der freie Öffnungsquerschnitt, durch den die Solarstrahlung in den Kanal eintreten kann, gegenüber einer gewöhnlichen Kanalöffnungsquerschnitt deutlich vergrößert ist. Entsprechend ist auch die reflektierende Oberfläche des Absorberkörpers, die diesen Kanal umgibt reduziert, so dass ein geringerer Anteil der Solarstrahlung wieder in die Umgebung reflektiert wird. Durch die Neigung der Strahleintrittsfläche wird erreicht, dass das unter unterschiedlichen Winkeln je nach Sonnenstand und je nach Position des jeweils reflektierenden Spiegels relativ zur ersten Absorberkörperoberfläche schräg einfallende Licht in den Kanal hineinreflektiert wird, wo es an den Wänden des Kanals als absorbiert und in Wärme umgewandelt wird. Der in der Kanalwand weiter reflektierte Bruchteil wird durch Vielfachreflexion in den Kanalwänden schließlich ebenfalls absorbiert.

Bevorzugt ist eine zur Kanalerstreckung geneigte Strahleintrittsfläche bei einer Mehrzahl der Kanäle des Absorberkörpers ausgebildet. Hierbei sind sämtliche Strahleintrittsflächen bevorzugt parallel zueinander ausgerichtet. Eine besonders effiziente Umwandlung von Solarstrahlung in Wärme wird bei solchen Absorberkörpern erreicht, bei denen alle Kanäle mit einer derartigen Strahleintrittsfläche versehen sind.

Der Winkel der Strahleintrittsfläche relativ zur Erstreckungsrichtung des zugehörigen Kanals kann unterschiedlich gewählt sein. Um einerseits die für die Absorption wirksame Oberfläche deutlich zu vergrößern und andererseits eine Reflektion des schräg auf die Strahleintrittsfläche auftreffenden Solarstrahlung tief in den Kanal zu ermöglichen, beträgt der zwischen der Strahleintrittsfläche und der Kanalersteckungsachse eingeschlossene Winkel bevorzugt 15- 30°, insbesondere ca. 22,5°.

Die Kanäle in dem Absorberkörper ihrerseits können unterschiedliche Querschnittgeometrien aufweisen. Zweckmäßigerweise weisen sie jeweils einen rechteckigen Öffnungsguerschnitt, wobei die Öffnungsquerschnitte schachbrettartig angeordnet auf der ersten Oberfläche des Absorberkörpers angeordnet sind.

Absorberkörper mit hexagonalen Kanalguerschnitten, die im Absorberkörper nach Art von Bienenwaben angeordnet sind, ermöglichen eine besonders effektive Strahlungseinkopplung, da bei gegenüber quadratischen Querschnitten unverändertem hydraulischem Durchmesser und gleicher Querschnittsfläche eine um 15 % vergrößerte Wärmeaustauschfläche erzielbar ist.

Die in wenigstens einem Kanal vorgesehene Strahleintrittsfläche kann auf verschiedene Weise in den Absorberkörper eingebracht werden. Ebenso ist es selbstverständlich möglich dem Absorberkörper von vornherein mit der Strahleintrittsfläche zu formen. Bevorzugt wird jedoch die Strahleintrittsfläche in den Absorberkörper nachträglich durch Fräsen eingeformt.

Besteht der Absorberkörper aus einem keramischen Werkstoff, insbesondere aus Siliciumkarbid oder siliciuminfiltriertem Siliciumkarbid, so ist nach einer besonders vorteilhaften Ausgestaltung die Strahleintrittsfläche in den Grünling des Absorberkörpers, d.h. in den noch nicht gebrannten Absorberkörper durch Fräsen eingeformt. Ebenso ist ein Einformen der Strahleintrittsflächen durch Sandstrahlen möglich. Der Vorteil ist, dass die Strahleintrittsfläche wesentlich präziser kostengünstiger in den Grünling eingebracht werden kann als dies bei einem fertig gebrannten Bauteil der Fall wäre.

Nach einer weiteren vorteilhaften Ausgestaltung sind die Kanten der gefrästen Kanalwände an der ersten Oberfläche des Absorberkörpers zusätzlich abgerundet. Bevorzugt ist diese Abrundung durch Sandstrahlen erfolgt. Handelt es sich bei den Absorberkörper wiederum um ein keramisches Bauteil, so ist hier entscheidend, dass die Abrundung der Wände durch Sandstrahlen am fertig gebrannten Bauteil erfolgt, da eine Bearbeitung des Grünlings durch Sandstrahlen zu einer unerwünschten Verformung der Strahleintrittsfläche führen würde.

Im Folgenden wird die Erfindung anhand einer Ausführungsbeispiele darstellenden Zeichnung näher erläutert. Es zeigen:
- Fig. 1: einen Absorberkörper für Solarstrahlung in perspektivischer Ansicht,
- Fig. 2: die Einzelheit X aus dem Absorberkörper aus Fig. 1,
- Fig. 3: den Absorberkörper aus Fig. 1 in ausschnittsweiser Schnittansicht gemäß Schnittlinie III-III in Fig. 1,
- Fig. 4: einen weiteren Absorberkörper für Solarstrahlung in perspektivischer Ansicht,
- Fig. 5: den Absorberkörper aus Fig. 4 in ausschnittsweiser Schnittansicht gemäß Schnittlinie V-V in Fig. 4, ,
- Fig. 6: den Absorberkörper aus Fig. 4 in Schmittansicht gemäß Fig. 5 mit angedeuteter Sonneneinstrahlung aus verschiedenen Richtungen
- Fig. 7a-c: ein Verfahren zur Herstellung eines Absorberkörpers gemäß Fig. 4 und 5.
- Fig. 8: einen weiteren Absorberkörper für Solarstrahlung in perspektivischer Ansicht und
- Fig. 9: die Einzelheit Y aus dem Absorberkörper aus Fig. 8.

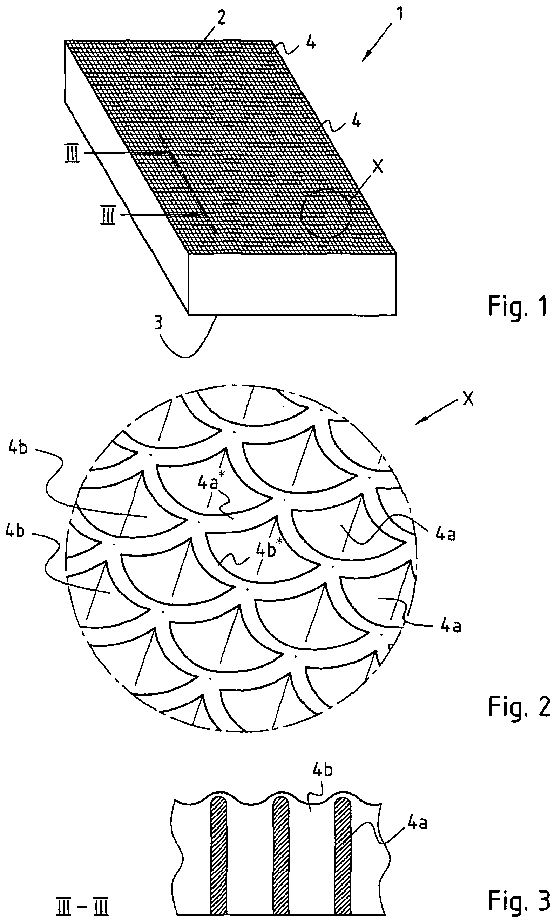

In Fig. 1 ist ein Absorberkörper 1 für Solarstrahlung in perspektivischer Darstellung gezeigt. Der Absorberkörper 1 ist als Flachbauteil mit einer ersten Oberfläche 2 und einer der ersten Oberfläche 2 gegenüberliegenden zweiten Oberfläche 3 ausgebildet, wobei der Absorberkörper 2 eine Vielzahl im Wesentlichen geradlinig verlaufender, die erste Oberfläche 2 mit der zweiten Oberfläche 3 verbindender Kanäle 4 aufweist. Der Absorberkörper 1 besteht vorliegend aus Siliziumcarbid, bevorzugt siliziuminfiltriertem Siliziumcarbid.

Der Absorberkörper 1 der Fig. 1 wird erfindungsgemäß zunächst als Grünling hergestellt, wobei der Grünling materialabtragend bearbeitet wird, um die erste Oberfläche 2 wirksam zu vergrößern und somit eine effektivere Absorption der Solarstrahlung zu erreichen. Im Ausführungsbeispiel der Fig. 1 bis 3 ist der Absorberkörper 1 als Grünling durch Sandstrahlen derart bearbeitet, dass die Kanten 4a* der Begrenzungswände 4a der Kanäle 4 konkav abgerundet werden, wie in Fig. 2, die die Einzelheit X der Fig. 1 darstellt, zu erkennen. Die dargestellten Konturen können beispielsweise durch Sandstrahlen bei einem Druck zwischen 3,5 und 5 bar und einer Bearbeitungsdauer zwischen 2 und 10 sec erzeugt werden. Hierzu wird vorzugsweise aus zwei Richtungen schräg und symmetrisch zur Oberflächennormalen auf die Oberfläche 2 gestrahlt und nach der genannten Bearbeitungszeit die Oberfläche um 90° gedreht, so dass beide zueinander orthogonal stehenden Gruppen von Kanten 4a* und 4b* in der dargestellten Weise abgerundet werden. Wie Untersuchungen der Anmelderin gezeigt haben, lassen sich somit Oberflächenvergrößerungen zwischen 15 und 20% erreichen.

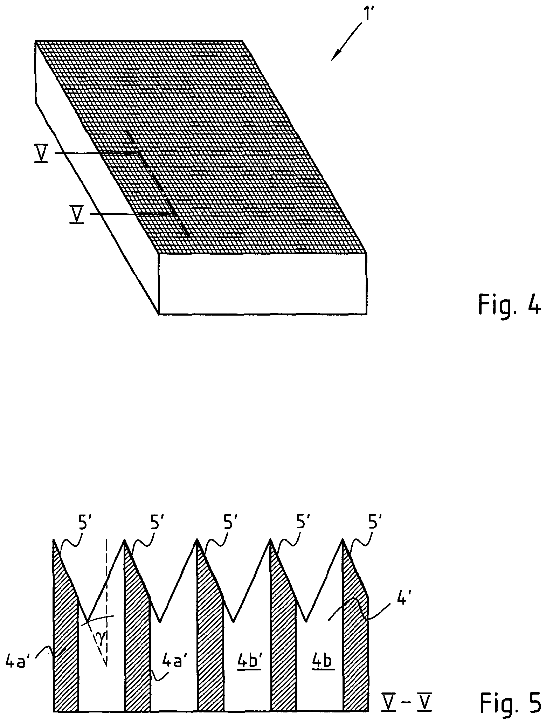

In Fig. 4 ist ein weiterer erfindungsgemäß hergestellter Absorberkörper 1' dargestellt. Nach Formung des Grünlings wird hierbei in sämtliche Kanäle 4' des Grünlings durch materialabtragende Bearbeitung jeweils eine Strahleintrittsfläche 5' eingeformt. Vorliegend erfolgt dies durch Fräsen.

Die Strahleintrittsfläche 5' ist in die Wand 4a' des Absorberkörpers 1' im Bereich der Mündung des jeweiligen Kanals 4' an der ersten Oberfläche 1' eingeformt. Wie der Fig. 5 ferner zu entnehmen ist, sind die Strahleintrittsflächen 5' eben ausgebildet und stehen sämtlich parallel zueinander, was eine Herstellung in einem gemeinsamen Fertigungsschritt vereinfacht. Ferner sind sie in einem Winkel γ zur Erstreckungsachse des jeweiligen Kanals 4' geneigt ausgebildet und reflektieren entsprechend die schräg einfallende Solarstrahlung tief in das Innere des zugehörigen Kanals 4', wodurch die Einkopplung der Solarstrahlung in den Absorberkörper 1' maximiert wird.

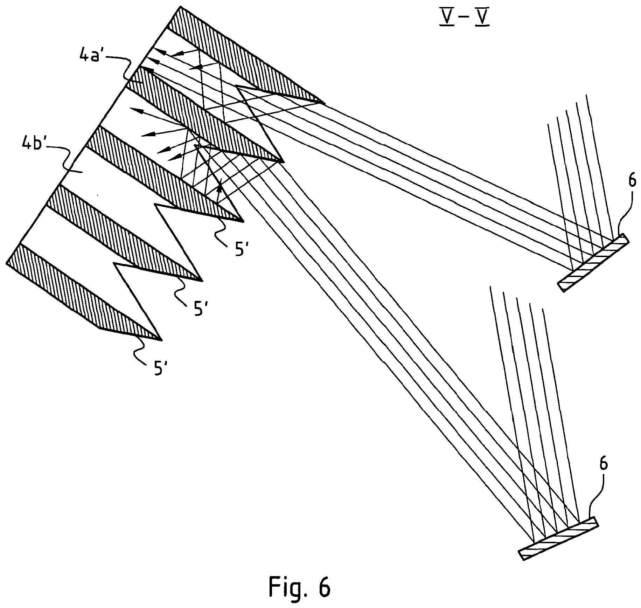

In Fig. 6 ist nun gezeigt, wie die Strahlung mithilfe der Strahleintrittsflächen 5' in das Innere der Kanäle 4' eingekoppelt wird. Dargestellt sind hierbei exemplarisch zwei Spiegel 6, die sich in unterschiedlicher Entfernung zum Absorberkörper 1' befinden und entsprechend die streng parallel auf die Spiegel 6 fallende Solarstrahlung unter unterschiedlichem Winkel zum Absorberkörper 1' hin reflektieren. Wie in Fig. 6 weiter gezeigt, werden die auf die Strahleintrittsflächen 5' einfallenden Strahlen von der ersten Oberfläche 2' weg ins Innere der Kanäle 4' reflektiert, wo sie durch Vielfachreflexion an den Kanalwänden 4a', 4b' absorbiert und in Wärme umgewandelt werden.

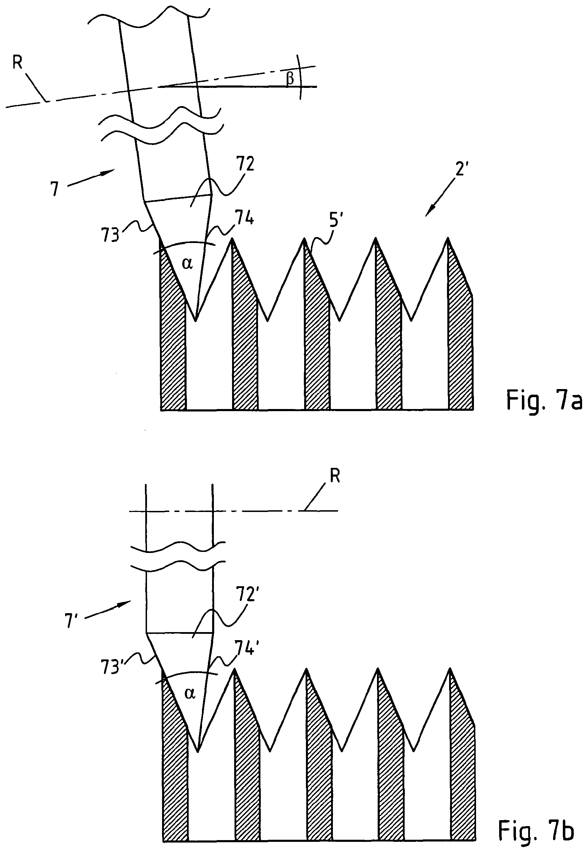

Fig. 7a-c zeigen verschiedene Bearbeitungsstrategien bei der Einformung der Strahleintrittsflächen in die Kanalwände 4a', 4b'. In Fig. 7a wird die Strahleintrittsfläche 5' mittels eines symmetrischen Scheibenfräser 7, der zur Oberfläche 2' des Absorberkörpers ca. um den Winkel ca. β = 7,5° geneigt ist, eingefräst. Die Bearbeitung in dem Absorberkörpergrünling 1' erfolgt dabei zeilenweise. Symmetrisch bedeutet hier, dass die Winkelhalbierende der im Winkel von α = ca. 30° zueinander stehenden Schneidflächen 73, 74 der Schneide 72 senkrecht zur Rotationsachse R des Fräsers steht.

Im Falle der Fig. 7b werden die Strahleintrittsflächen 5' mit einem asymmetrischen Scheibenfräser 7' eingebracht. Hierbei steht die Rotationsachse des Fräsers 7' parallel zur Oberfläche 2' des Absorberkörpers 1', jedoch steht die Winkelhalbierende der Schneidflächen 73', 74' der Schneide 72' nicht rechtwinklig zur Rotationsachse R des Fräsers.

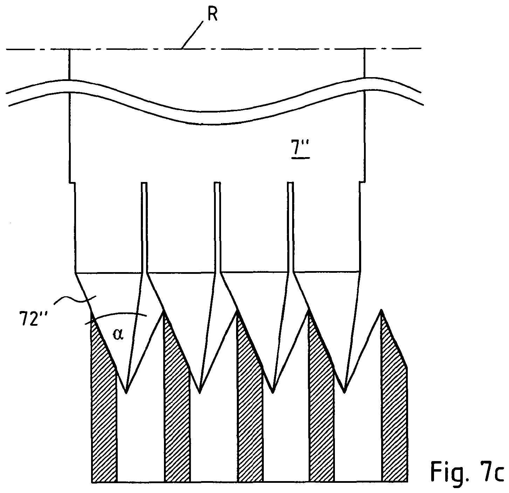

Fig. 7c zeigt eine besonders zeiteffiziente Bearbeitung. Verwendet wird hierbei ein Multikanalfräser 7" mit einer großen Zahl von auf einer Walze angeordneten Schneiden 72". Diese sind jeweils zu den asymmetrischen Fräsern 72' der Fig. 7b identisch ausgeführt und rotierenden um eine gemeinsame Achse R. Hierdurch lässt sich eine große Zahl von Strahleintrittsflächen 5' gleichzeitig in den Absorberkörpergrünling 1' einformen.

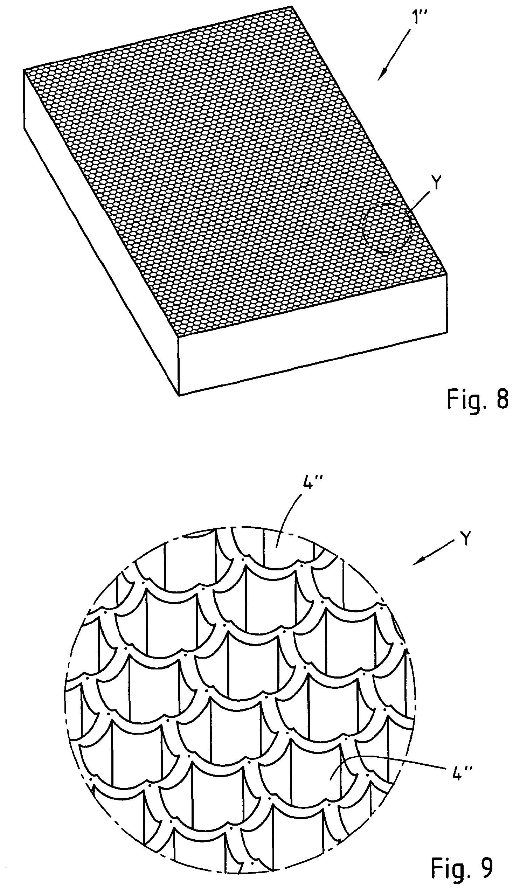

In Fig. 8 ist ein weiterer Absorberkörper 1" für Solarstrahlung in perspektivischer Ansicht dargestellt. Er weist wabenförmig angeordnete Kanäle 4'' mit jeweils hexagonalem Querschnitt auf, die eine gegenüber Kanälen mit quadratischem Querschnitt nochmals um ca. 15 % gesteigerte für die Absorption wirksame Fläche aufweisen, wobei der hydraulische Durchmesser und die Querschnittsfläche unverändert sind. Durch Sandstrahlen des Grünlings können analog zum Ausführungsbeispiel der Fig. 1 bis 3 die vorderen Kanten der Kanäle 4" abgerundet werden, wie in der Einzelheit Y der Fig. 9 erkennbar. Ebenso ist es möglich durch Sandstrahlen parallele Strahleintrittsflächen in den Kanälen zu erzeugen (nicht dargestellt). Hierzu wird die erste Oberfläche des Absorberkörpers geneigt zum Sandstrahl ausgerichtet und relativ zur Sandstrahldüse bzw. den Sandstrahldüsen bewegt. Um eine möglichst große Fläche des Absorberkörpers zu beaufschlagen, ist es vorteilhaft die Sandstrahldüsen in einer Richtung bevorzugt orthogonal zur Relativbewegung zwischen Absorberkörper und Düse oszillieren zu lassen.

## Patentansprüche

1. Verfahren zur Herstellung eines keramischen Absorberkörpers (1, 1') für Solarstrahlung mit einer ersten Oberfläche (2, 2') und einer der ersten Oberfläche (2, 2') gegenüberliegenden zweiten Oberfläche, wobei der Absorberkörper eine Vielzahl im Wesentlichen geradlinig verlaufender, die erste Oberfläche mit der zweiten Oberfläche verbindender Kanäle (4, 4') aufweist,
umfassend die folgenden Verfahrensschritte:
- Erzeugen eines Absorberkörpergrünlings,
- materialabtragende Bearbeitung der ersten Oberfläche des Absorberkörpergrünlings zur Vergrößerung der für die Absorption wirksamen Oberfläche und
- Brennen des Absorberkörpergrünlings.

2. Verfahren nach Anspruch 1,
**dadurch gekennzeichnet, dass**
die materialabtragende Bearbeitung der ersten Oberfläche (2, 2') des Absorberkörpergrünlings durch Einformen einer Strahleintrittsfläche (5') in die Wandung wenigstens eines Kanals (4') des Absorberkörpergrünlings im Bereich seiner Mündung an der ersten Oberfläche (2, 2') erfolgt, wobei die Strahleintrittsfläche (5') im Wesentlichen eben und zur Kanalerstreckungsachse geneigt ausgebildet wird.

3. Verfahren nach Anspruch 2,
**dadurch gekennzeichnet, dass**
die Strahleintrittsfläche (5') in die Wandung (4a') einer Mehrzahl von Kanälen (4') des Absorberkörpergrünlings eingeformt wird.

4. Verfahren nach Anspruch 3,
**dadurch gekennzeichnet, dass**
die Strahleintrittsflächen (5') zueinander parallel ausgebildet werden.

5. Verfahren nach einem der Ansprüche 2 bis 4,
**dadurch gekennzeichnet, dass**
der zwischen der Strahleintrittsfläche (5') und der Kanalerstreckungsachse eingeschlossene Winkel 15° bis 30°, insbesondere ca. 22,5° beträgt.

6. Verfahren nach einem der Ansprüche 2 bis 5,
**dadurch gekennzeichnet, dass**
die Strahleintrittsfläche (5') in den Absorberkörpergrünling eingefräst wird.

7. Verfahren nach Anspruch 6,
**dadurch gekennzeichnet, dass**
die Strahleintrittsfläche (5') mittels eines asymmetrischen Scheibenfräsers (7') mit zur ersten Oberfläche (2') des Absorberkörpers (1') parallel ausgerichteter Rotationsachse (R) in den Absorberkörpergrünling eingefräst wird.

8. Verfahren nach Anspruch 7,
**dadurch gekennzeichnet, dass**
die Schneidflächen (73', 74') des asymmetrischen Scheibenfräsers (7') einen Winkel von 20° bis 50°, bevorzugt ca. 30°, einschließen.

9. Verfahren nach Anspruch 6,
**dadurch gekennzeichnet, dass**
die Strahleintrittsfläche (5') mittels eines symmetrischen Scheibenfräsers (7') mit zur ersten Oberfläche (2') des Absorberkörpers (1') geneigt ausgerichteter Rotationsachse (R) in den Absorberkörpergrünling eingefräst wird.

10. Verfahren nach Anspruch 9,
**dadurch gekennzeichnet, dass**
die Schneidflächen (73, 74) des symmetrischen Scheibenfräsers (7) einen Winkel von 20° bis 50°, bevorzugt ca. 30°, einschließen, wobei die Rotationsachse (R) des Scheibenfräsers (7) zwischen 5° und 25°, bevorzugt ca. 7,5°, zur ersten Oberfläche (2') des Absorberkörpers (1') geneigt ausgerichtet wird.

11. Verfahren nach einem der Ansprüche 6 bis 10,
**dadurch gekennzeichnet, dass**
die Kanäle (4') des Absorberkörpers (1') mit jeweils einem rechteckigen Öffnungsquerschnitt schachbrettartig auf der ersten Oberfläche (2') des Absorberkörpers (1') angeordnet sind, wobei die Strahleintrittsfläche (5') bei einer Mehrzahl von Kanälen (4') des Absorberkörpers (1') derart eingefräst wird, dass der Fräser (7, 7', 7") die Strahleintrittsflächen (5') zeilenweise in die Wandung (4a') der in einer Zeile angeordneten Kanäle (4') einfräst.

12. Verfahren nach Anspruch 7 und 11,
**dadurch gekennzeichnet, dass**
der Scheibenfräser als Multikanalfräser (7") ausgebildet ist und eine Mehrzahl von Strahleintrittsflächen (5') gleichzeitig in den Absorberkörper (1') einfräst.

13. Verfahren nach einem der Ansprüche 2 bis 12,
**dadurch gekennzeichnet, dass**
die vorderen Kanten der Kanalwände (4a', 4b') des gebrannten Absorberkörpers (1') mittels Sandstrahlen abgerundet werden.

14. Verfahren nach einem der Ansprüche 1 bis 5,
**dadurch gekennzeichnet, dass**
die materialabtragende Bearbeitung durch Sandstrahlen der ersten Oberfläche (2) des Absorberkörpergrünlings erfolgt.

15. Verfahren nach Anspruch 14,
**dadurch gekennzeichnet, dass**
die Sandstrahlen von zwei Seiten symmetrisch zur Flächennormalen der ersten Oberfläche (2) auf die erste Oberfläche (2) auftreffen.

16. Verfahren nach Anspruch 14 oder 15,
**dadurch gekennzeichnet, dass**
das Sandstrahlen der ersten Oberfläche (2) des Absorberkörpergrünlings mit einem Druck zwischen 3,5 und 5 bar bei einer Bearbeitungsdauer zwischen 2 und 10 sec erfolgt.

## Claims

1. Method for production of a ceramic absorber member (1, 1') for solar radiation with a first surface (2, 2') and a second surface opposite the first surface (2, 2'), wherein the absorber member has a large number of channels (4, 4') running substantially in straight lines, linking the first surface to the second surface,
comprising the following steps:
- producing an absorber member green preform,
- material-stripping processing of the first surface of the absorber member green preform to enlarge the effective surface for absorption, and
- firing the absorber member green preform.

2. Method according to claim 1,
**characterized in that**
the material-stripping processing of the first surface (2, 2') of the absorber member green preform occurs through forming a beam entry face (5') in the wall of at least one channel (4') of the absorber member green preform in the region of its mouth on the first surface (2, 2'), with the beam entry face (5') configured substantially flat and inclined relative to the axis of the length of the channel.

3. Method according to claim 2,
**characterized in that**
the beam entry face (5') is formed in the wall (4a') of a plurality of channels (4') of the absorber member green preform.

4. Method according to claim 3,
**characterized in that**
the beam entry faces (5') are configured parallel to each other.

5. Method according to one of claims 2 through 4,
**characterized in that**
the angle enclosed between the beam entry face (5') and the axis of the length of the channel is 15° to 30°, in particular approx. 22.5°.

6. Method according to one of claims 2 through 5,
**characterized in that**
the beam entry face (5') is milled into the absorber member green preform.

7. Method according to claim 6,
**characterized in that**
the beam entry face (5') is milled into the absorber member green form by means of an asymmetrical side milling cutter (7') with an axis of rotation (R) oriented parallel to the first surface (2') of the absorber member (1').

8. Method according to claim 7,
**characterized in that**
the cutting faces (73', 74') of the asymmetrical side milling cutter (7') enclose an angle of 20° to 50°, preferably approx. 30°.

9. Method according to claim 6,
**characterized in that**
the beam entry face (5') is milled into the absorber member green preform by means of a symmetrical side milling cutter (7') with an axis of rotation (R) oriented inclined relative to the first surface (2') of the absorber member (1').

10. Method according to claim 9,
**characterized in that**
the cutting faces (73,74) of the symmetrical side milling cutter (7) enclose an angle of 20° to 50°, preferably approx. 30°, with the axis of rotation (R) of the side milling cutter (7) oriented inclined between 5° and 25°, preferably approx. 7.5°, relative to the first surface (2') of the absorber member (1').

11. Method according to one of claims 6 through 10,
**characterized in that**
the channels (4') of the absorber member (1'), each with a rectangular opening cross-section, are arranged checkerboard-like on the first surface (2') of the absorber member (1'), with the beam entry face (5') milled in in a plurality of channels (4') of the absorber member (1') such that the cutter (7, 7', 7'') mills in the beam entry faces (5') line by line into the wall (4a') of the channels (4') arranged in a line.

12. Method according to claim 7 and 11,
**characterized in that**
the side milling cutter is configured as a multichannel cutter (7'') and mills in a plurality of beam entry faces (5') simultaneously into the absorber member (1').

13. Method according to one of claims 2 through 12,
**characterized in that**
the front edges of the channel walls (4a', 4b') of the fired absorber member (1') are rounded by sandblasting.

14. Method according to one of claims 1 through 5,
**characterized in that**
the material-stripping processing takes place by sandblasting of the first surface (2) of the absorber member green preform.

15. Method according to claim 14,
**characterized in that**
the beams of sand are incident on the first surface (2) from two sides symmetrically to the normal of the first surface (2).

16. Method according to claim 14 or 15,
**characterized in that**
the sandblasting of first surface (2) of the absorber member green preform takes place with a pressure between 3.5 and 5 bar with a processing time between 2 and 10 sec.

## Revendications

1. Procédé de fabrication d'un corps d'absorbeur céramique (1, 1') destiné au rayonnement solaire, ayant une première surface (2, 2') et une seconde surface opposée à la première surface (2, 2'), le corps d'absorbeur présentant une pluralité de canaux (4, 4') s'étendant sensiblement en ligne droite, reliant la première surface avec la seconde surface, ledit procédé comportant les étapes de procédé suivantes :
- production d'un corps vert de corps d'absorbeur ;
- traitement par enlèvement de matière de la première surface du corps vert de corps d'absorbeur pour l'agrandissement de la surface active pour l'absorption ; et
- cuisson du corps vert de corps d'absorbeur.

2. Procédé selon la revendication 1,
**caractérisé par le fait que**
le traitement par enlèvement de matière de la première surface (2, 2') du corps vert de corps d'absorbeur a lieu par formage d'une face d'entrée de faisceau (5') dans la paroi d'au moins un canal (4') du corps vert de corps d'absorbeur dans la région de son débouché sur la première surface (2, 2'), la face d'entrée de faisceau (5') étant configurée sensiblement plane et inclinée par rapport à l'axe d'extension du canal.

3. Procédé selon la revendication 2,
**caractérisé par le fait que**
la face d'entrée de faisceau (5') est formée dans la paroi {4a') d'une pluralité de canaux (4') du corps vert de corps d'absorbeur.

4. Procédé selon la revendication 3,
**caractérisé par le fait que**
les faces d'entrée de faisceau (5') sont configurées parallèles entre elles.

5. Procédé selon l'une des revendications 2 à 4, **caractérisé par le fait que**
l'angle formé entre la face d'entrée de faisceau (5') et l'axe d'extension du canal est de 15° à 30°, en particulier d'environ 22,5°.

6. Procédé selon l'une des revendications 2 à 5, **caractérisé par le fait que**
la face d'entrée de faisceau (5') est fraisée dans le corps vert de corps d'absorbeur.

7. Procédé selon la revendication 6,
**caractérisé par le fait que**
la face d'entrée de faisceau (5') est fraisée dans le corps vert de corps d'absorbeur au moyen d'une fraise à disque asymétrique (7') ayant un axe de rotation (R) orienté parallèlement à la première surface (2') du corps d'absorbeur (1').

8. Procédé selon la revendication 7,
**caractérisé par le fait que**
les faces de coupe (73', 74'} de la fraise à disque asymétrique (7') forment un angle de 20° à 50°, de préférence d'environ 30°.

9. Procédé selon la revendication 6,
**caractérisé par le fait que**
la face d'entrée de faisceau (5') est fraisée dans le corps vert de corps d'absorbeur au moyen d'une fraise à disque symétrique {7') ayant un axe de rotation (R) orienté de manière inclinée par rapport à la première surface (2') du corps d'absorbeur (1').

10. Procédé selon la revendication 9, **caractérisé par le fait que**
les faces de coupe {73, 74) de la fraise à disque symétrique (7) forment un angle de 20° à 50°, de préférence d'environ 30°, l'axe de rotation (R) de la fraise à disque (7) étant orienté de manière inclinée entre 5° et 25°, de préférence d'environ 7,5°, par rapport à la première surface (2') du corps d'absorbeur (1').

11. Procédé selon l'une des revendications 6 à 10,
**caractérisé par le fait que**
les canaux (4') du corps d'absorbeur (1'), ayant chacun une section d'ouverture rectangulaire, sont disposés en échiquier sur la première surface (2'} du corps d'absorbeur (1'), la face d'entrée de faisceau (5'} dans le cas d'une pluralité de canaux (4') du corps d'absorbeur (1') étant fraisée de telle sorte que la fraise (7, 7', 7'') fraise les faces d'entrée de faisceau (5') ligne par ligne dans la paroi (4a') des canaux (4') disposés sur une ligne.

12. Procédé selon l'une des revendications 7 et 11,
**caractérisé par le fait que**
la fraise à disque est configurée comme fraise multi-canaux {7'') et fraise simultanément dans le corps d'absorbeur (1') une pluralité de faces d'entrée de faisceau (5'}.

13. Procédé selon l'une des revendications 2 à 12,
**caractérisé par le fait que**
les bords avant des parois de canaux (4a', 4b') du corps d'absorbeur cuit (1') sont arrondis par sablage.

14. Procédé selon l'une des revendications 1 à 5,
**caractérisé par le fait que**
le traitement d'enlèvement de matière a lieu par sablage de la première surface (2) du corps vert de corps d'absorbeur.

15. Procédé selon la revendication 14, **caractérisé par le fait que**
les jets de sable frappent la première surface (2) à partir de deux côtés symétriquement par rapport à la normale de la première surface (2).

16. Procédé selon l'une des revendications 14 ou 15,
**caractérisé par le fait que**
le sablage de la première surface (2) du corps vert de corps d'absorbeur a lieu avec une pression entre 3,5 et 5 bars lors d'une durée de traitement entre 2 et 10 secondes.
